# EUROPEAN PATENT APPLICATION

(11) **EP 2 256 244 A2**
(43) Date of publication of application: **01.12.2010**
(21) Application number: 10161371.9
(22) Date of filing: 28.04.2010
(51) Int. Cl.: E01B 9/00, F16B 37/00

(54) **Rail screw assembly**

(30) Priority: 01.05.2009 GB 0907533
(71) Applicant: Multiclip Company Limited, Addlestone, Surrey KT15 2AR (GB)
(72) Inventor: Hughes, Malcolm, Plymouth, PL7 1PQ (GB); Ruston, Nicholas Denis, Plymouth, PL5 1UP (GB)
(74) Representative: Fenlon, Christine Lesley

(57) **Abstract**

A rail screw assembly is provided comprising a rail screw (20) having a threaded portion (24) and a rail screw head portion (29) to which a tool can be applied to rotate the rail screw (20), a removable fastener (40), and a sleeve (30), wherein the rail screw (20) has a hollow section (22) having an opening at an end surface of the rail screw head portion (29), and the hollow section (22) is adapted to accept the removable fastener (40) such that, when the removable fastener (40) is engaged, the sleeve (30) is retained on the rail screw (20) in a position in which it restricts access to the rail screw head portion (29), and is freely rotatable about the rail screw head portion (29).

## Description

The present invention relates to a screw assembly for use in the rail industry for the purpose of securing apparatus to rail sleepers.

Rail sleepers are generally laid transverse to the direction of travel, and form a base for the rail track. Rails and other components are attached to the sleepers.

Rails are attached to sleepers by means of a clip. Other components, such as balises, may be mounted on sleepers in a way which incorporates the use of a rail screw.

Rail screws are also known in the industry as sleeper screws, or screw spikes, amongst other names, and are generally made from steel. Ordinarily, a tool with the ability to grip the head portion of a rail screw, such as a wrench, or a pair of stilsons, is used to rotate the rail screw to tighten or loosen it.

Components and hardware for use in the rail industry are rigorously tested to meet strict safety standards. In the UK, for example, the Rail Safety and Standards Board (RSSB) are responsible for publishing the Railway Group Standards (RGS) which define mandatory requirements in respect of the mainline railway. Therefore, components and attachment means, such as rail screws, are substantially standardised, both nationally and internationally.

Rail components and their mounting and attachment means can be attractive to thieves. This is particulaorly true in the case of objects with a high scrap metal value. Railway track is designed to cover vast distances, and as such, some sections are remote and are easily targeted by thieves. Conventional rail screws can be removed by a thief using commercially available off-the-shelf equipment. This allows the thief to remove the components which had been attached to the sleepers by the rail screw, as well as the rail screws themselves.

It is desirable to provide a rail screw or rail screw assembly which makes the theft of rail components and its mounting systems more difficult.

A rail screw assembly embodying the present invention comprises a rail screw having a threaded portion and a rail screw head portion to which a tool can be applied to rotate the rail screw; a removable fastener; and a sleeve. The rail screw has a hollow section having an opening at an end surface of the rail screw head portion and the hollow section is adapted to accept the removable fastener such that, when the removable fastener is engaged, the sleeve is retained on the rail screw in a position in which it restricts access to the rail screw head portion, and is freely rotatable about the rail screw head portion.

Advantageously, a rail screw assembly embodying the present invention provides a rotatable sleeve or cuff which covers the head portion so that torque cannot be applied to the screw with conventional gripping tools such as a wrench or stilsons. This rotatable sleeve is held in place by a removable fastener which engages with a hollow portion in the rail screw. Whilst the removable fastener is, by definition, removable, it may take longer to remove and require more specialist equipment to remove it than is required to unscrew a conventional rail screw. Therefore any equipment held in place by the rail screw assembly becomes more secure against theft.

A rail screw or rail screw assembly embodying the present invention increases security against theft. The only commercially available off-the-shelf equipment capable of removing an assembly embodying the present invention is expensive, cumbersome, and difficult to operate, such as powerful cutting equipment. However, rail screw or rail screw assemblies embodying the present invention can be provided which can be removed by authorised personnel so that replacement and maintenance of rail track components and equipment can be performed without destroying components or using equipment which could harm the rails themselves. The above mentioned desirable features are provided in a rail screw or rail screw assembly which retains the fundamental design features of a conventional rail screw so that the new rail screw or rail screw assembly will already be passed as safe by an organisation such as a rail standards agency. Furthermore, retaining the fundamental design features of an ordinary rail screw has the advantage that additional components can be retrofitted to an existing rail screw, having cost savings in terms of both manufacture and testing.

The removable fastener may be a screw having a threaded portion. The hollow portion may then be correspondingly tapped to receive the thread of the removable fastener. Alternatively, the removable fastener could be a fastener such as a rivet.

The sleeve may cover completely an outer edge of the head portion of the rail screw, that is, the edge to which a gripping tool would ordinarily be applied. However, it is also advantageous merely to cover the head portion enough that any person attempting to remove the screw from its position in use, without first removing the sleeve, could not access a large enough portion of the head portion to attach a gripping tool and apply a sufficient torque to remove the rail screw.

Preferably, the removable fastener has a socket shaped to receive a key whereby the fastener can be removed. Advantageously, the removable fastener can then only be removed by a key holder. A rail maintenance company or company responsible for the track equipment being secured by the rail screw assembly can then maintain control over who may apply or remove the screws to or from the track. The nature of the socket and key used will depend on the cost restrictions in producing the rail screw assembly. As a simple embodiment, the socket may be shaped with edges and dimensions that prevent torque from being applied to the fastener using standardised tools such as allen (hex) keys or screwdrivers. This then requires any person wishing to remove the removable fastener to have specialist equipment, for example, a key matching the socket. The task of undoing the removable fastener, and in turn, the rail screw, and removing the equipment held on the track thereby, immediately becomes more time consuming and less attractive to a thief. The socket may be uniquely shaped.

Advantageously, the removable fastener is a threaded fastener having a head portion. The socket can then be incorporated into the head portion of the removable fastener.

Preferably, the socket has a central protrusion. The central protrusion in the socket may equal in height the depth of the socket itself. In this way, the socket becomes a continuous channel surrounding the central protrusion. Of course, the central protrusion may be disposed such that the socket is not continuous, and the socket could thus appear to form a C-shape or L-shape in the removable fastener. The central protrusion may be any shape, but is preferably rounded, that is to say, essentially cylindrical. The central protrusion adds complexity to the shape of the socket so that it is very difficult for an unauthorised person to produce a tool to remove the removable fasteners. Furthermore, should the central protrusion be disposed such that the socket is a continuous channel, it becomes very difficult to apply any torque to the removable fastener using a screwdriver. If a screwdriver was placed in the socket channel, and any torque applied, the screwdriver would merely slip around the central protrusion without transferring a turning force to the removable fastener. There is no requirement that the shape of the central protrusion correspond to the edge of the socket, that is to say, the socket channel may vary in width from location to location.

Advantageously, the socket and the key are shaped complementarily with an edge perpendicular to an axis of insertion of the key in the socket which defines a straight-sided irregular polygon with a plurality of internal angles. The key may have a section shaped as a prism, and the cross section taken perpendicular to the principal axis of the prism should also define the straight-sided irregular polygon with a plurality of internal angles defined by the corresponding edge of the socket. In order to fit inside the socket, the appropriate dimensions of the key should be slightly smaller than those of the socket. Shaping the key and socket in this way greatly reduces the chance of an unauthorised person having a tool that will be able to remove the removable fastener. Each company using rail screw assemblies embodying the present invention may have their own shape of socket and key. Or it may be that particular sections of track have a particular shape of socket and key, and this shape changes from section to section. The controlled allocation of socket and key shapes provides another way for parties involved in rail maintenance to control and keep track of which personnel have access to particular rail components.

In order to increase the difficulty of removing the removable fastener without a dedicated key, the rail screw head portion and the removable fastener may be adapted so that the removable fastener can be countersunk with respect to the end surface of the rail screw head portion. This countersinking could be to the extent that the head portion of the removable fastener is only slightly raised with respect to the end surface of the head portion of the rail screw, or it could be flat with respect to the end surface of the head portion of the rail screw. Alternatively, the removable fastener could be countersunk to such an extent that, when engaged, it is sunk with respect to the end surface of the head portion of the rail screw. In embodiments of the invention the removable fastener, when engaged, holds the sleeve in place such that the sleeve covers some or all of the head portion of the rail screw. The more difficult it is for an unauthorised person to remove, or destroy, the removable fastener, the more secure are the rail screw and the components held in place thereby. The countersinking may require adaptation of the rail screw head portion, the removable fastener, and possibly the sleeve.

The removable fastener may have a head portion proportioned such that it projects beyond the outer edge of the rail screw head portion, and thus the sleeve can be a tubular sleeve surrounding the rail screw head portion and be held in place. Alternatively, the sleeve may have an inwardly disposed rim such that, when the removable fastener is engaged, the removable fastener covers a section of the inwardly disposed rim to prevent the sleeve from being removed from the assembly. The inwardly disposed rim and the sleeve may be forged or produced as a single piece, or the sleeve and rim may comprise a cap and barrel assembly. The overlap between the inwardly disposed rim and the removable fastener prevents the sleeve from being removed from the rail screw head portion, and leaves the sleeve rotatable. In embodiments in which the removable fastener is countersunk, the inwardly disposed rim may have a section having a surface that is angled to enable the countersinking. Optionally, the inwardly disposed rim and the removable fastener are adapted so that the removable fastener can be countersunk with respect to the inwardly disposed rim. Countersinking prohibits access to the removable fastener, thus making it more difficult for an unauthorised person to remove the removable fastener. Theft of equipment secured in place by the rail screw is therefore improved.

Embodiments of the present invention may include a method of modifying a rail screw so that it becomes the rail screw in the rail screw assembly as defined above. The method may include forming the hollow section of the rail screw in the rail screw assembly defined above by drilling into the end surface of the rail screw head portion. Optionally, the method may include shaping the opening of the hollow section so that the removable fastener and possibly also an inwardly disposed portion of the sleeve can be countersunk with respect to the end surface of the head portion of the rail screw. Shaping the opening may include chamfering, countersinking, or crowning the edge to create a bevelled edge or frustoconical portion, using a drill, countersink, or a countersink drill.

Advantageously, carrying out the method defined above allows an existing rail screw to be adapted for use in a rail screw assembly as earlier defined. Retrofitting an existing rail screw in this way can reduce manufacturing costs and provide an effective recycling method for existing rail screws.

Preferred features of the present invention will now be described, purely by way of example, with reference to the accompanying drawings, in which:-
Figure 1 is an exploded perspective view of a rail screw assembly embodying the present invention;
Figure 2 is a perspective view of an embodiment, with the removable fastener engaged and the sleeve in place;
Figure 3a is a perspective view of a barrel forming part of a sleeve of an embodiment;
Figure 3b is a side view of a barrel forming part of a sleeve of an embodiment;
Figure 3c is a top view of a barrel forming part of a sleeve of an embodiment;
Figure 4a is a side view of a cap forming part of a sleeve of an embodiment;
Figure 4b is a top view of a cap forming part of a sleeve of an embodiment;
Figure 4c is a detail view of portion A from Figure 4a;
Figure 4d is a perspective view of cap forming part of a sleeve of an embodiment;
Figure 5a is a rail screw of an embodiment, with a hollow section having an opening at an end surface of the head portion, and adapted so that a removable fastener can be countersunk;
Figure 5b is a detail view of portion A from Figure 5a;
Figure 6 is a perspective view of a rail screw of an embodiment;
Figure 7 is a top view of a rail screw of an embodiment;
Figure 8a is a perspective view with transparent surfaces of a cap and barrel assembly forming a sleeve of an embodiment;
Figure 8b is a perspective view with opaque surfaces of a cap and barrel assembly forming a sleeve of an embodiment.

All measurements and particular angles provided in the description of embodiments are exemplary values provided for the purposes of illustrating a working embodiment of a rail screw assembly embodying the present invention. It should be understood that these values can be varied within limits that enable the components described herewith to perform the functions for which they are intended and which are described accordingly.

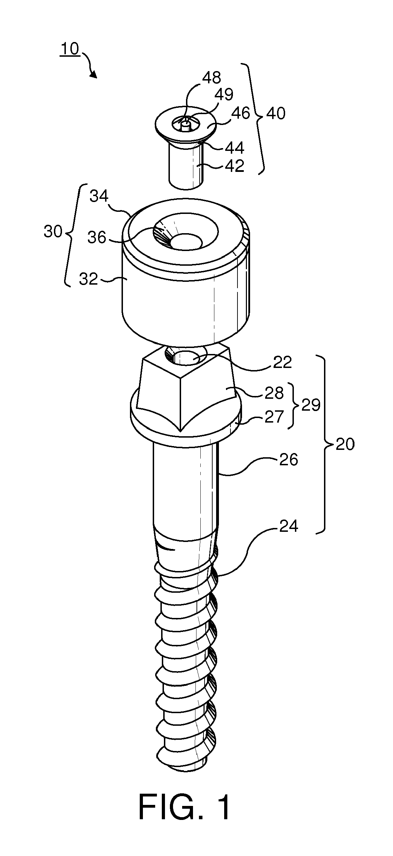

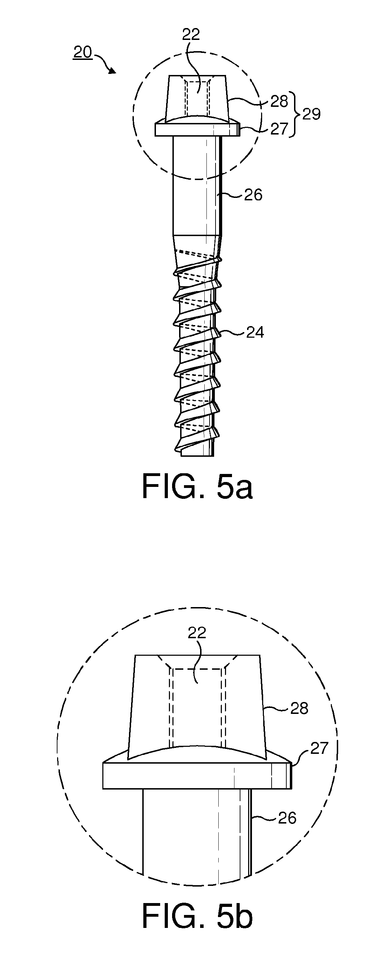

Figure 1 is an exploded view of a rail screw assembly 10 embodying the present invention. The assembly comprises a rail screw 20 which has the form of a standard rail screw with the addition of a hollow section 22 opening out onto the end surface of the head portion 29. A rail screw 20 of a rail screw assembly 10 embodying the present invention may be made of steel. It will be understood by those skilled in the art that other materials displaying similar mechanical properties can also be used to produce a rail screw. Furthermore, numerous rail screw manufacturers and forms of rail screw exist globally, particular as rail standards and specifications vary from country to country, and those skilled in the art will appreciate that embodiments of the present invention are not limited to any particular form of rail screw, but are adaptable and applicable to rail screws of innumerable shapes, sizes, and configurations. The rail screw 20 is a threaded fastener, and has a threaded portion 24, an intermediate portion 26, and a head portion 29. The threaded portion 24 is a shaft with a helical ridge, or flight. The shaft increases in diameter toward the head portion 29 of the rail screw 20, whereas the outer diameter of the helical ridge remains constant. The extent to which the helical ridge protrudes from the shaft therefore decreases as proximity to the head portion 29 increases. Optionally, the change in diameter of the shaft with respect to distance along the shaft, or taper, may remain constant, or it may vary. In the rail screw 20 illustrated by Figure 5a, there are two distinct regions of the threaded portion 24, one with a very slight taper, and one, closer to the head portion 29 of the rail screw 20, with a more pronounced taper. The intermediate portion 26 of the rail screw 20 connects the threaded portion 24 and the head portion 29. The intermediate portion 26 is a smooth shaft, continuing from the head portion end of the threaded portion 24, and has a substantially constant diameter. The shaft of the intermediate portion 26 is essentially a right circular cylinder. The shaft in regions exhibiting a taper is essentially a truncated right circular cone. The head portion 29 of the screw has a shoulder 27 and a top portion 28. The shoulder 27 has a wider diameter than the intermediate portion 26, so that it extends outward from the intermediate portion 26. The surface of the shoulder 27 contacting the shaft is substantially flat. The opposing surface is domed. The top portion 28 extends from the domed surface of the shoulder 27, and is substantially cuboidal in shape, though an edge of the cuboid is shaped to allow it to be in continuous contact with the domed surface of the shoulder 27. An end surface of the top portion 28 is therefore rectangular. This rectangular end surface has an opening to the hollow section 22. In some embodiments, the opening is wider at the rectangular end surface, and the width of the hollow section 22 tapers as depth from the end surface increases. This taper does not continue to a point, but ends after a finite depth, beyond which the hollow section 22 is approximately a right circular cylinder. The hollow section 22 may be tapped to receive a threaded fastener.

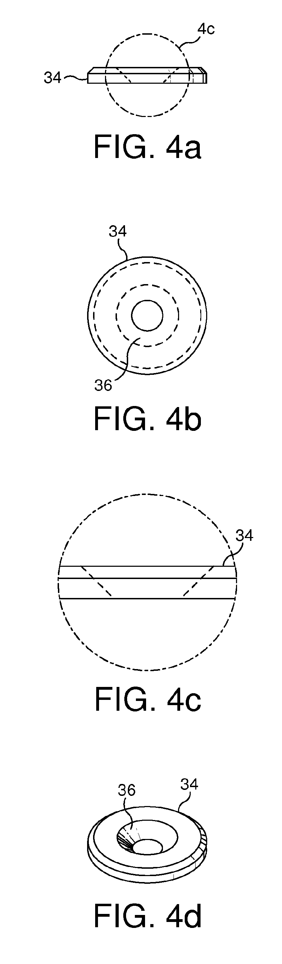

The rail screw assembly 10 also comprises a sleeve 30. The sleeve 30 can be forged as a single piece, or, in some embodiments, can be a cap and barrel assembly, as explained with reference to Figures 4a to 4d. The sleeve 30 can be made of stainless steel. It will be understood by those skilled in the art that other materials displaying similar mechanical properties can also be used to produce a sleeve of embodiments of the invention. The sleeve 30 is a circular tube 32 having an inwardly disposed rim 34 at one end. The rim 34 and tube 32 may be, for example, welded to one another, or the sleeve 30 may be cast, deep drawn, or stamped. Those skilled in the art will be aware that there are numerous processes which could be used to manufacture a sleeve 30 embodying the present invention. The inwardly disposed rim 34 forms a ring substantially perpendicular to a principal axis of the tube 32, but the rim 34 may also have an inner section having a surface 36 which is diagonally disposed with respect to the ring and the central axis of the tube 32 so that it bends back into the tube 32. The corner between the tube 32 and the inwardly disposed rim can be a sharp corner, or it can be rounded, or there may be a diagonal section joining the tube 32 to the rim 34.

The rail screw assembly 10 also comprises a removable fastener 40. The removable fastener 40 could be a rivet which engages with the hollow section 22 to hold the sleeve 30 in place. In an embodiment, the removable fastener 40 is a threaded fastener, and has a threaded portion 42, a shoulder portion 44, and a head portion 46. The threaded portion 42 is a shaft with a helical ridge, or flight, and the shaft is substantially a right circular cylinder, although may exhibit a slight taper, with the outer diameter of the ridge remaining constant, and the shaft narrowing as distance from the head portion 46 increases. At one end of the shaft a shoulder portion 44 connects the shaft to the head portion 46. The entire length of the shaft may be threaded, or it may be that there is a section 42 of shaft that is threaded, and that the removable fastener 40 also comprises a portion of shaft that is not threaded. It may be that there is no shoulder portion between the threaded fastener and the head portion. Alternatively, the shoulder portion 44 may be a truncated cone in shape, with the base of the cone forming the head portion 46 of the removable fastener 40. The head portion 46 is substantially flat, but in this embodiment includes a socket 48, or depressed portion 48, having a central protrusion 49.

The shape of the socket 48 is such that the removable fastener 40 cannot be removed without a tool or key shaped for removing the removable fasteners of that rail screw assembly 10 or group of rail screw assemblies. In particular, no torque can be applied to the removable fastener 40 using hex or allen keys, screw drivers, or tools intended for any other standard screw drive types, such as, but not limited to, crosshead, Pozidriv, Square, Robertson, Torx, Tri-Wing, Torq-set, spanner head, Triple square, Polydrive, One-way-Clutch, spline drive, double-hex, or Bristol.

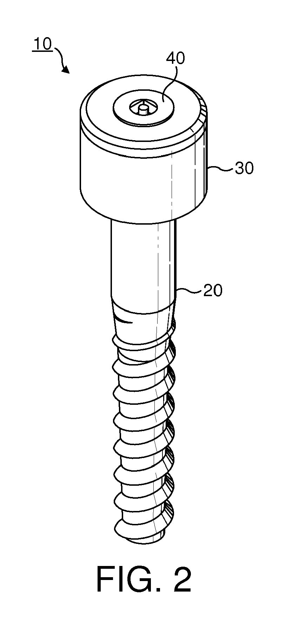

Figure 2 depicts the components of Figure 1, with the removable fastener 40 engaged, or in a seated position. The threaded portion 42 of the removable fastener 40 engages with the hollow section 22 of the rail screw 20 via the end of the sleeve 30 having the inwardly disposed rim 34, so that the tube 32 of the sleeve 30 extends over the head portion 29 of the rail screw 20 and restricts access to the head portion 29 of the rail screw 20. The hollow section 22 of the rail screw 20 is adapted to receive the removable fastener 40. In the case of a removable fastener 40 having a threaded portion 42, the hollow section 22 of the rail screw 20 is correspondingly tapped to receive the threaded portion 42 of the removable fastener 40 such that the removable fastener 40 can secure the sleeve 30 in place. The sleeve 30 can retain some freedom to move relative to the rail screw 20, particularly rotationally, but also in terms of its relative position, as long as it cannot be removed from the assembly 10 completely. It can be appreciated from Figure 2 that the taper of the hollow section 22 of the rail screw 20, the diagonally disposed section or surface 36 of the rim 34 of the sleeve 30, and the truncated cone shape of the shoulder portion 44 of the removable fastener 40, enable the head portion 46 of the removable fastener 40 to be countersunk into the rail screw 20. In Figure 2, the head portion 46 of the removable fastener 40 is substantially flat with respect to the ring of the inwardly disposed rim 34 of the sleeve 30. In this way, access to the removable fastener 40 is restricted. The extent to which the removable fastener 40 can be countersunk will depend on the angles and extent of the taper, the diagonally disposed section or surface 36 of the rim, and the sides of the truncated cone of the shoulder portion 44 of the removable fastener 40 itself. Furthermore, the extent of countersinking can be affected by the length of the hollow section 22 of the rail screw 20 in comparison to the removable fastener 40.

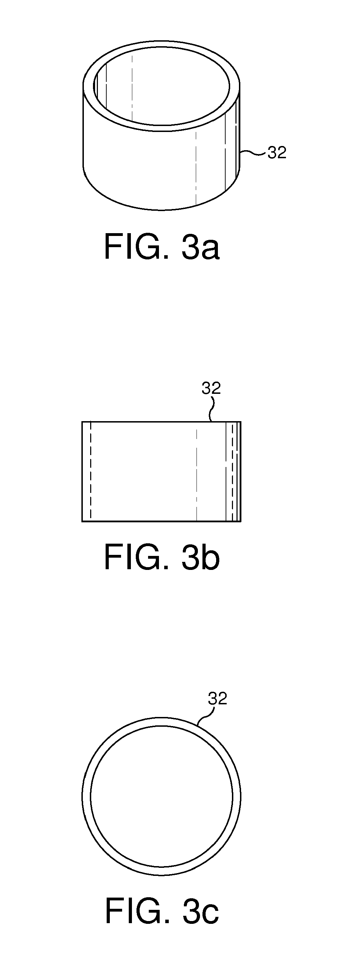

Figure 3a illustrates a tube portion 32 of a sleeve 30 of an embodiment. It may be that such a tube 32 is the entire sleeve 30, or, it may be that such a tube 32 is a part of a cap and barrel assembly. Preferably, the diameter of the tube 32 is adequate that, when the tube 32 is in place as part of a rail screw assembly 10 embodying the present invention, the tube 32 restricts access to the rail screw head portion 29, particularly any part of the rail screw head portion 29 which is adapted to provide means for the rail screw 20 to be rotated.

Figure 3b is a side view of a tube 32 illustrated in Figure 3a. The length of the tube 32 is 31.0mm, and in exemplary embodiments the tube is composed of stainless steel. Stainless steel is a suitable material as it will retain its form and mechanical properties for a period of time suitable for the desired lifespan of an assembly embodying the present invention, but other materials may be used. As can be seen from Figure 3c, the outer diameter of the tube 32 is 48.3mm, and the inner diameter 42.7mm. Of course, embodiments may have variations on these measurements, depending on the particular model of rail screw forming part of the assembly 10, the width of material used to make the tube 32, and other particular design requirements.

Figure 4a illustrates a cap 34 of a cap and barrel assembly forming a sleeve 30 of an embodiment in more detail. The corner of the cap between the outer edge and the flat ring of the inwardly disposed rim 34 is formed by an angled section disposed at an angle of 45° from the flat surface turning toward the principal axis of the cap and barrel assembly. The cap has a height of 6.0mm. The dashed line indicates an inner, diagonally disposed, surface 36 of the rim 34. This surface is disposed to enable the removable fastener 40 to be countersunk when part of a rail screw assembly 10 embodying the present invention.

Figure 4b is a top view of the cap 34 of Figure 4a. The outer dashed line indicates the inner edge of the diagonal corner, and the inner dashed line indicates the outer edge of the diagonally disposed inner surface 36 of the rim 34. The outer diameter of the cap 34 is 48.3mm. The circular hole in the cap defined by the most inward continuous edge of the diagonally disposed inner surface 36 of the rim 34 has a diameter of 12.5mm. This inner diameter should be sufficient to allow the removable fastener 40 to tightly engage with the hollow section of the rail screw 20 via the sleeve 30 such that the sleeve 30 is secured in place by the removable fastener 40. Preferably, the inner diameter is smaller than a maximum width of the removable fastener 40 so that the sleeve 30 cannot be removed from an assembly 10 without first having to remove the removable fastener 40 from the rail screw 20.

Figure 4c provides a detail view of the portion defined by the broken circle labelled A in Figure 4a. The diagonally disposed inner surface 36 of the rim 34 is disposed at an angle of 45° turning from the flat surface of the rim 34 to the inner surface 36 when viewed perpendicularly to the flat surface. The diagonal surface 36 has a depth of 5.8mm perpendicular to the flat surface of the rim 34. The diagonally disposed inner surface 36 of the rim 34 enables a removable fastener 40 to be countersunk with respect to the flat surface of the rim 34. The angle and measurements of a particular embodiment will depend on the style and dimensions of the removable fastener 40, and the extent to which countersinking of the removable fastener 40 is required. Figure 4d is a perspective view of the cap 34 of Figures 4a-c.

Optionally, embodiments of the invention can include a sleeve 30 having a retaining lip (not shown) extending from the flat surface of the rim 34 and positioned outside of and above the outer edge of the diagonally disposed inner surface 36 of the rim 34. The retaining lip should, with the removable fastener 40 in an engaged position in the rail screw 20 via the sleeve 30, be operable to be bent or otherwise shaped into a shape, position, or configuration, that prevents the removable fastener 40 from being completely removed from the assembly 10. Specifically, when viewed from a plane perpendicular to a principal axis of the rail screw, the retaining lip can be bent or otherwise shaped into a shape, position, or configuration, in which it is at least partially coincident with the diagonally disposed inner surface 36 of the rim 34, thereby physically preventing the removable fastener 40 from being removed from the assembly 10. The retaining lip may be a continuous lip surrounding the diagonally disposed inner surface 36 of the rim 34, or it may be broken such that there are one or a plurality of distinct portions of lip that can be bent or otherwise shaped separately. Any retaining lip could be incorporated into embodiments of the present invention to prevent a tool having an edge from being jammed between the diagonally disposed inner surface 36 of the rim 34 and the removable fastener 40.

Figure 5a is a schematic diagram of a rail screw 20 in which lines and edges which would not normally be visible in a rail screw viewed from an equivalent position are represented by dashed lines. A rail screw 20 can be manufactured for use in a rail screw assembly 10 embodying the present invention. Alternatively, an existing rail screw can be adapted by machining a surface of the head portion so that it is suitable to receive a removable fastener 40. For example, a threaded hollow section 22 can be drilled into the top of a rail screw 20. The hollow section 22 illustrated by Figure 5a has a wide opening at the top surface of the rail screw 20, and has a section in which the hollow section 22 narrows as the depth from the top surface increases. This section is adapted to enable countersinking of the removable fastener 40.

Figure 5b is a detail view of the portion of the rail screw 20 defined by the broken circle in Figure 5a and labelled A. The height of the head portion 29 of the rail screw 20 is 30mm, measured from the bottom surface of the shoulder 27 of the head portion 29 to the end surface of the top portion 28. The diameter of the hollow section 22 at the end surface of the top portion 28 is 16mm. The depth of the hollow section 22, measured from the base to the opening at the end surface of the top portion 28, is 20mm.

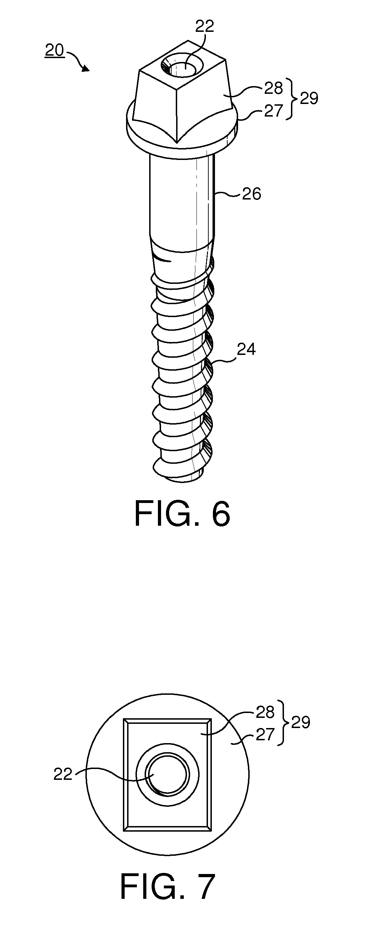

Figure 6 is a perspective view of a rail screw 20 of an embodiment. Figure 7 is a top view of a rail screw 20 of an embodiment. In the embodiment pictured in Figure 7, an M12 tap is machined into the head portion 29 of the rail screw 20 so that the hollow section 22 is suitable to receive an M12 screw thread, that is to say that the removable fastener 40 should have an M12 sized screw thread. It will be apparent to a person skilled in the art that other taps, thread sizes, and various screw pitches may be used.

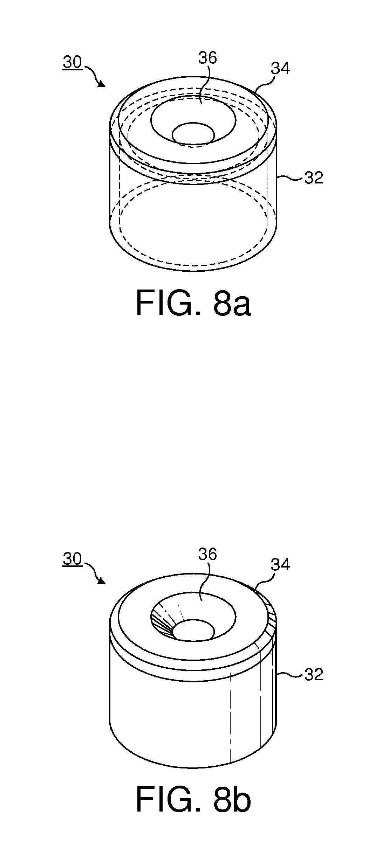

Figures 8a and 8b are perspective views of a sleeve 30 of an embodiment. Figure 8a indicates lines and edges that would otherwise not be visible using dashed lines.

## Claims

1. A rail screw assembly (10) comprising:
a rail screw (20) having a threaded portion (24) and a rail screw head portion (29) to which a tool can be applied to rotate the rail screw (20);
a removable fastener (40); and
a sleeve (30);
wherein the rail screw (20) has a hollow section (22) having an opening at an end surface of the rail screw head portion (29), and the hollow section (22) is adapted to accept the removable fastener (40) such that, when the removable fastener (40) is engaged, the sleeve (30) is retained on the rail screw (20) in a position in which it restricts access to the rail screw head portion (29), and is freely rotatable about the rail screw head portion (29).

2. The rail screw assembly (10) according to claim 1, wherein
the removable fastener (40) has a socket (48) shaped to receive a key whereby the removable fastener (40) can be removed.

3. The rail screw assembly (10) according to claim 1 or 2, wherein
the removable fastener (40) is a threaded fastener having a head portion (46).

4. The rail screw assembly (10) according to any of claims 2 to 3, wherein
the socket (48) has a central protrusion (49).

5. The rail screw assembly (10) according to any of claims 2 to 4, wherein
the socket (48) and the key are shaped complementarily with an edge perpendicular to an axis of insertion of the key in the socket (48) which defines a straight-sided irregular polygon with a plurality of internal angles.

6. The rail screw assembly (10) according to any of claims 1 to 5, wherein
the rail screw head portion (29) and the removable fastener (40) are adapted so that the removable fastener (40) can be countersunk with respect to the end surface of the rail screw head portion (29).

7. The rail screw assembly (10) according to any of claims 1 to 6, wherein
the sleeve (30) has an inwardly disposed rim (34) such that, when the removable fastener (40) is engaged, the removable fastener (40) covers a section of the inwardly disposed rim (34) to prevent the sleeve (30) from being removed from the assembly (10).

8. The rail screw assembly (10) according to claim 7, wherein
the inwardly disposed rim (34) and the removable fastener (40) are adapted so that the removable fastener (40) can be countersunk with respect to the inwardly disposed rim (34).

9. A method of modifying a rail screw so that it becomes the rail screw (20) in the rail screw assembly (10) as claimed in any of claims 1 to 8.
